(19) Europäisches Patentamt European Patent Office Office européen des brevets

(11) **EP 4 550 452 A1**

(12) **EUROPEAN PATENT APPLICATION**
published in accordance with Art. 153(4) EPC

(43) Date of publication:
**07.05.2025 Bulletin 2025/19**

(21) Application number: **23831264.9**

(22) Date of filing: **22.06.2023**

(51) International Patent Classification (IPC):
***H01M 4/139*** (2010.01)   ***H01M 4/62*** (2006.01)

(52) Cooperative Patent Classification (CPC):
**H01M 4/139; H01M 4/62;** Y02E 60/10

(86) International application number:
**PCT/JP2023/023137**

(87) International publication number:
**WO 2024/004820 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022  JP 2022106326**

(71) Applicant: **DAIKIN INDUSTRIES, LTD.
Osaka-shi, Osaka 530-0001 (JP)**

(72) Inventors:
  • **YAMADA, Takaya
    Osaka-shi, Osaka 530-0001 (JP)**
  • **YAMADA, Masahiko
    Osaka-shi, Osaka 530-0001 (JP)**

• **HIRAGA, Kentarou
  Osaka-shi, Osaka 530-0001 (JP)**
• **TERADA, Junpei
  Osaka-shi, Osaka 530-0001 (JP)**
• **FUJIWARA, Kae
  Osaka-shi, Osaka 530-0001 (JP)**
• **SUI, Xianwei
  Osaka-shi, Osaka 530-0001 (JP)**
• **TOKUHIRA, Katsusada
  Osaka-shi, Osaka 530-0001 (JP)**
• **USAMI, Ryouta
  Osaka-shi, Osaka 530-0001 (JP)**
• **FUJIOKA, Seika
  Osaka-shi, Osaka 530-0001 (JP)**

(74) Representative: **Hoffmann Eitle
Patent- und Rechtsanwälte PartmbB
Arabellastraße 30
81925 München (DE)**

(54) **METHOD FOR MANUFACTURING ELECTRODE FOR SECONDARY BATTERY USING NON-AQUEOUS ELECTROLYTE, BINDING AGENT FOR SECONDARY BATTERY ELECTRODE USING NON-AQUEOUS ELECTROLYTE, BINDING AGENT FOR SECONDARY BATTERY ELECTRODE, COMPOSITION FOR ELECTRODE PREPARATION, ELECTRODE MIXTURE, AND ELECTRODE**

(57)   Provided is a method for producing a secondary battery electrode, using PTFE, capable of reducing electrical resistance thereof and achieving excellent strength at the same time, and a binder. A method for producing a secondary battery electrode using a non-aqueous electrolytic solution, including step (1) of preparing a powder composition for producing an electrode by using a binder that is a powder which is composed of a composition essentially including a polytetrafluoroethylene resin and a conductive aid and which is free of an active material, and step (2) of applying a shear force while mixing the composition for producing an electrode to obtain an electrode mixture, wherein step (2) is carried out with a content of a solvent in the composition for producing an electrode being 10% by mass or less.

**EP 4 550 452 A1**

**Description**

Technical Field

The present disclosure relates to a method for producing a secondary battery electrode using a non-aqueous electrolytic solution, a binder for a secondary battery electrode using a non-aqueous electrolytic solution, a binder for a secondary battery electrode, a composition for producing an electrode, an electrode mixture, and an electrode.

Background Art

Consideration is given to the use of fibrillated polytetrafluoroethylene (PTFE) as a binder in an electrode of a lithium ion battery including a non-aqueous electrolytic solution (Patent Literature 1).
Further, the disclosure also includes the obtention of a homogeneously mixed powder of an electrically conductive material and PTFE by spray drying (Patent Literatures 2 to 4).

Citation List

Patent Literature

Patent Literature 1: Japanese Translation of PCT International Application Publication No. 2017-517862
Patent Literature 2: Japanese Patent Laid-Open No. 6-316784
Patent Literature 3: Japanese Patent Laid-Open No. 2008-140809
Patent Literature 4: International Publication No. WO 2020/170797
Patent Literature 5: Japanese Patent Laid-Open No. 2020-115485

Summary of Invention

Technical Problem

The present disclosure can provide, regarding an electrode using PTFE, a method for producing a secondary battery electrode capable of reducing electrical resistance thereof and achieving excellent strength at the same time, and a binder.

Solution to Problem

The present disclosure relates to a method for producing a secondary battery electrode using a non-aqueous electrolytic solution including a step (1) of preparing a powder composition for producing an electrode by using a binder that is a powder which is composed of a composition essentially including a polytetrafluoroethylene resin and a conductive aid and which is free of an active material, and a step (2) of applying a shear force while mixing the composition for producing an electrode to obtain an electrode mixture, wherein step (2) is carried out with a content of a solvent in the composition for producing an electrode being 10% by mass or less. The electrode mixture preferably has a content of the polytetrafluoroethylene resin of 1.8% by mass or less.
The binder preferably has a moisture content of 1,000 ppm or less.
The binder is preferably produced by a production method including a step (A) of mixing a polytetrafluoroethylene resin and a conductive aid in the presence of a liquid medium.
The liquid medium is preferably water.
The binder is preferably obtained by a production method including a step (B) of drying the composition obtained in step (A) by spray drying.
The polytetrafluoroethylene resin preferably has a standard specific gravity of 2.130 to 2.200.
The composition for producing an electrode preferably includes a positive electrode active material.
The secondary battery is preferably a lithium ion secondary battery.
The polytetrafluoroethylene resin preferably has a fibrous structure with a fibril diameter (median value) of 150 nm or less in a secondary battery electrode.
The binder preferably has an element ratio of fluorine to carbon (F/C ratio) of 0.4 or more and 3.0 or less as measured by elemental analysis.
The present disclosure also relates to a binder for a secondary battery electrode using a non-aqueous electrolytic solution, that is a powder which is composed of a composition essentially including a polytetrafluoroethylene resin and a conductive aid and which is free of an electrode active material, wherein the polytetrafluoroethylene resin and the conductive aid are contained in a proportion of 90:10 to 65:35 in terms of weight ratio.

The binder for a secondary battery electrode preferably has a moisture content of 1,000 ppm or less.

The binder for a secondary battery electrode preferably has an element ratio of fluorine to carbon (F/C ratio) of 0.4 or more and 3.0 or less as measured by elemental analysis.

The present disclosure also relates to a binder for a secondary battery electrode using a non-aqueous electrolytic solution, including a mixed powder of a polytetrafluoroethylene resin and ketjen black or a carbon nanotube.

The present disclosure also relates to a composition for producing an electrode, containing the above-described binder for a secondary battery electrode.

The present disclosure also relates to an electrode mixture containing the above-described binder for a secondary battery electrode.

The present disclosure also relates to an electrode having the above-described electrode mixture.

Advantageous Effects of Invention

In the present disclosure, provided is a method for producing a secondary battery electrode, using PTFE, capable of reducing electrical resistance thereof and achieving excellent strength at the same time, and a binder.

Description of Embodiment

The present disclosure will now be described in detail.

The electrode mixture using PTFE as a binder occasionally had a high resistance value of an electrode. The present disclosure provides a method for producing an electrode capable of solving such a problem and for obtaining an electrode with a low resistance value.

The electrode mixture using PTFE as a binder acts as a binder when PTFE is fibrillated.

However, when PTFE and a conductive aid are mixed in the form of a powder respectively to produce an electrode, the electrode may have high resistance. The reason for this is presumed that PTFE is unevenly distributed in the electrode thereby failing to sufficiently form a conductive path. Further, the uneven distribution of components in the electrode causes a decrease in strength of the electrode. On the other hand, vigorous kneading for eliminating the uneven distribution causes excessive PTFE fibrillation, resulting in inferior flexibility and strength. For this reason, the use of a binder in such a way that uneven distribution of PTFE and a conductive aid does not occur can solve such a problem.

The method for producing a secondary battery electrode using a non-aqueous electrolytic solution of the present disclosure uses a binder that is a powder essentially including a polytetrafluoroethylene resin and a conductive aid and being free of an active material. Hereinafter, this is denoted as the first binder of the present disclosure. This binder and components to be mixed with the binder will now be described in detail.

On the other hand, also with regard to an active material, it is known that when PTFE and a conductive aid are mixed in advance, lithium dissolves from the active material due to moisture in a liquid medium and the active material deteriorates, thereby causing problems such as a decrease in a battery capacity and an increase in battery resistance (Patent Literature 5). For this reason, the use of the binder being free of an active material and composed of a composition essentially including PTFE and a conductive aid can achieve the objects of the present disclosure without any restriction on the active material.

Additionally, when a mixed powder of a polytetrafluoroethylene resin and ketjen black or a carbon nanotube is used as a binder, it is preferable from the viewpoint that electrode resistance can be decreased, and the binder using this can also achieve the objects of the present disclosure. Such an effect cannot be obtained when other carbon conductive aids such as acetylene black are used. Such a binder is denoted as the second binder of the present disclosure.

The first method for producing a secondary battery electrode using a non-aqueous electrolytic solution of the present disclosure uses a binder that is a powder which is composed of a composition essentially including PTFE and a conductive aid and which is free of an active material. That is, particles constituting the powder do not consist of PTFE or a conductive aid, but are composed of a composition containing both PTFE and a conductive aid.

This binder and components to be mixed with the binder will now be described in detail.

(Polytetrafluoroethylene resin)

In the present disclosure, the PTFE is not limited, and may be a homopolymer or a copolymer that can be fibrillated, but a homopolymer is more preferred.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

The PTFE powder serving as the raw material for preparing the mixture of the present disclosure has a standard specific gravity (SSG) of 2.200 or less. Having SSG within the above range can also improve electrode strength.

The SSG is preferably 2.180 or less, more preferably 2.170 or less, even more preferably 2.160 or less, even much more preferably 2.150 or less, even much more preferably 2.145 or less, and particularly preferably 2.140 or less.

The SSG is also preferably 2.130 or more.

The standard specific gravity (SSG) is measured by preparing a sample according to ASTM D-4895-89, and measuring the specific gravity of the obtained sample by the water displacement method.

The PTFE used in the present disclosure may have a core-shell structure. Examples of PTFE having a core-shell structure include a PTFE that includes in the particle a core of high molecular weight PTFE and a shell of a lower molecular weight PTFE or modified PTFE. Examples of the PTFE include the PTFE described in Japanese Translation of PCT International Application Publication No. 2005-527652.

Powdered PTFE that satisfies each of the above-described parameters can be obtained by a conventional production method. For example, such powdered PTFE may be produced in accordance with the production methods described in International Publication No. WO 2015-080291, International Publication No. WO 2012-086710, and the like.

(Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, carbon nanohorns, carbon nanofibers, fullerenes and graphene, and VGCF. Ketjen black, acetylene black, carbon nanotubes are particularly preferable. Of carbon nanotubes, multi-walled carbon nanotubes are preferable. One type of these may be used alone, or two or more types may be used in any combination or ratio. Examples of commercial carbon blacks include TOKA BLACK #4300, #4400, #4500, #5500, and the like (manufactured by Tokai Carbon Co., Ltd., furnace black), Printex L, and the like (manufactured by Degussa AG, furnace black), Raven 7000, 5750, 5250, 5000 ULTRA III, 5000 ULTRA, and the like, Conductex SC ULTRA, Conductex 975 ULTRA, and the like, PUER BLACK 100, 115, 205, and the like (manufactured by Columbian Company, furnace black), #2350, #2400B, #2600B, #30050B, #3030B, #3230B, #3350B, #3400B, #5400B, and the like (manufactured by Mitsubishi Chemical Corporation, furnace black), MONARCH 1400, 1300, 900, Vulcan XC-72R, Black Pearls 2000, LITX-50, LITX-200, and the like (manufactured by Cabot, furnace black), Ensaco 250G, Ensaco 260G, Ensaco 350G, Super-P Li (manufactured by Imerys S.A., furnace black), ketjen black ECP, ECP-600JD, LIONITE CB, and the like (manufactured by Lion Specialty Chemicals Co., Ltd., ketjen black), and DENKA BLACK HS-100, Li-100, FX-35 (manufactured by Denka Company Limited, acetylene black). Examples of commercial VGCF include VGCF-H (manufactured by Showadenkosya. Co. Ltd.), and the like. Examples of commercial multi-walled carbon nanotubes include FT7000 (manufactured by JiangSu Cnano Technology Co., LTD), and the like. The multi-walled carbon nanotubes have an average external diameter of preferably 4 nm to 20 nm, and more preferably 6 nm to 12 nm. The average fiber length is preferably 1 to 30 $\mu$m, and more preferably 3 $\mu$m to 20 $\mu$m. These enable the achievement of good electric conductivity.

For the production of an electrode sheet, a conductive aid may further be added, mixed, and used.

The binder of the present disclosure preferably contains the conductive aid in a mass proportion of 1.0 to 60.0 relative to the total amount of the binder. This enables the achievement of good electric conductivity and electrode strength. The above lower limit is more preferably 1.5 or more, and further preferably 2.0 or more. The above upper limit is more preferably 55.0 or less, and further preferably 50.0 or less.

In the present disclosure, the binder essentially contains a conductive aid, but for the production of an electrode sheet using an electrode mixture, PTFE and the conductive aid may further be added, mixed and used.

The conductive aid is preferably used such that it has a content in the electrode mixture of usually 0.1% by mass or more, preferably 0.5% by mass or more, and more preferably 0.8% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

Examples of materials optionally added when mixing the conductive aid and PTFE include a conductive material, a dispersant, and a thickener. For example, celluloses such as carboxymethylcellulose (CMC) and methyl cellulose (MC) can be preferably used as the thickener.

When these components other than a conductive aid and PTFE are used, the amount of these components to be mixed is preferably in a proportion of 5.0% by mass or less relative to the total amount of the binder. When the above other components are mixed in an amount exceeding 5.0% by mass, the objects of the present invention may not be sufficiently achieved.

(Binder)

The binder used in the present disclosure is the composition essentially including PTFE and a conductive aid in the form of a powder. That is, the composition in the state where PTFE and a conductive aid are mixed is a powder, and a powder mixture of respective powders of a PTFE powder and a conductive aid powder is not encompassed. This state is not limited, but particles granulated by spray drying is particularly preferred.

The binder preferably contains, in terms of weight ratio, PTFE and a conductive aid in a proportion of 99:1 to 50:50. In the above mixing proportions, 95:5 to 60:40 is preferred, and 90:10 to 65:35 is more preferred.

The method for producing the above binder is not limited, and the binder can be produced in any method but is preferably produced by a production method having a step (A) of mixing PTFE and a conductive aid in the presence of a liquid medium. In this case, examples include a method of adding a powder conductive aid to a liquid dispersion of PTFE and mixing, a method of mixing a liquid dispersion of PTFE and a liquid dispersion of a conductive aid, and the like.

The mixing can be carried out by a common method. Examples include mixers such as a disper, a homomixer, and a planetary mixer, homogenizers, wet jet mill, and the like, but are not limited thereto.

In the above step (A), a dispersion essentially including PTFE, a conductive aid, and a liquid medium is used. It is preferred that such a dispersion has the total amount of PTFE and a conductive aid of 1 to 60% by weight relative to the total amount of PTFE, the conductive aid, and the liquid medium. The above lower limit is more preferably 2% by weight or more, and further preferably 3% by weight or more. The above upper limit is more preferably 50% by weight or less, and further preferably 30% by weight or less.

Mixing these in a liquid medium is preferable from the viewpoint that PTFE and a conductive aid can be mixed with a high homogeneity. The liquid medium for this mixing is preferably water.

In this case, PTFE used as a raw material is preferably a water dispersion obtained by emulsion polymerization.

The PTFE used as a raw material of the binder has an average primary particle size of preferably 100 to 350 nm or more because this allows an electrode mixture sheet having higher strength and excellent homogeneity to be obtained. When an average primary particle size is within the above range, the above PTFE has a high molecular weight, and a binding force and flexibility of an electrode are improved.

The above average primary particle size is more preferably 340 nm or less, even more preferably 330 nm or less, even much more preferably 300 nm or less, even much more preferably 280 nm or less, and particularly preferably 250 nm or less, and also more preferably 150 nm or more, even more preferably 170 nm or more, and even much more preferably 200 nm or more.

The above average primary particle size is measured by the following method.

An aqueous dispersion of PTFE is diluted with water to a solid content concentration of 0.15% by mass, the transmission of 550 nm incident light with respect to the unit length of the obtained diluted latex and the number-based length average particle size determined by measuring the directional diameter in a transmission-type electron micrograph are measured to thereby create a calibration curve. Using the calibration curve, the number average particle size is determined from the actual transmission of 550 nm incident light of each sample and defined as the average primary particle size.

The mixture of PTFE and the conductive aid, which are mixed in the liquid medium by the above step (A), preferably has the liquid medium subsequently removed by being dried by spray drying (step (B)). Examples of the drying method include a shelf dryer, a vacuum dryer, a freeze dryer, a hot air dryer, a drum dryer, and a spray dryer. A spray dryer is particularly preferred. The spray drying is a technique in which a mixture of a liquid and a solid is sprayed into air and dried quickly to produce a dry powder.

By this, a binder in the state of a powder in which PTFE and a conductive aid are homogeneously mixed can be obtained. The spray drying is a well-known common technique, and can be carried out by a common technique using any known apparatus. The step (B) can be carried out by a common method utilizing a known common apparatus. The drying temperature preferably ranges, for example, from 100°C or more and 250°C or less. A drying temperature of 100°C or more can remove the solvent sufficiently, and a drying temperature of 250°C or less can decrease energy consumption, which are hence preferred. The drying temperature is more preferably 110°C or more, and more preferably 220°C or less. The liquid volume to be fed may range, depending on the production scale, for example, 0.1 L/h or more and 2 L/h or less. The nozzle size for spraying a prepared solution may range, depending on the production scale, for example, a diameter of 0.5 mm or more and 5 mm or less.

It is preferred that the thus obtained binder has a moisture content of 1,000 ppm or less.

A moisture content of 1,000 ppm or less is preferred from the viewpoint of producing a secondary battery with reduced gas generation as an initial characteristic.

More preferably, the moisture content is 500 ppm or less.

[Measurement of moisture content]

Using a Karl Fischer moisture meter (ADP-511/MKC-510N, manufactured by Kyoto Electronics Industry Manufacturing Co., Ltd.) equipped with a boat-type moisture vaporizer, the moisture content of the binder was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

The second binder of the present disclosure is a mixed powder of a polytetrafluoroethylene resin and ketjen black and/or carbon nanotube. This mixed powder, when used as a binder, can decrease electrode resistance, and is more preferred from the viewpoint of improving battery characteristics than the case where a well-known carbon conductive aid such as acetylene black is used, and can be used in the same manner as the first binder as mentioned above.

The ketjen black and/or carbon nanotube used in the second binder is not limited, and those mentioned above can be used. Further, it is preferred that the carbon nanotube is multi-walled, and more specifically, carbon nanotubes having an average fiber length of 1 to 20 $\mu$m are preferably used.

The polytetrafluoroethylene used in the second binder can be the same as the first binder mentioned above.

The second binder may be obtained through steps (A) and (B) mentioned above as is the first binder mentioned above, or may be obtained by simply mixing these components.

In Composition for producing an electrode, and the like to be described below in detail, the above first binder and the second binder can be used by the same method.

(Composition for producing an electrode)

The composition for producing an electrode means the composition containing all components essential in an electrode. That is, the composition for producing an electrode means the composition in the state where other electrode components such as electrode active materials are mixed with the binder mentioned above. The composition for producing an electrode is the composition further containing, in addition to the above binder, electrode active materials, a conductive aid to be added, and the like.

(Electrode active material)

The positive electrode active material is not limited as long as it can electrochemically absorb and desorb alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:

an alkali metal-manganese spinel composite oxide represented by the formula:

$$M_a Mn_{2-b} M^1_b O_4$$

wherein M is at least one metal selected from the group consisting of Li, Na and K, $0.9 \leq a$; $0 \leq b \leq 1.5$, and $M^1$ is at least one metal selected from the group consisting of Fe, Co, Ni, Cu, Zn, Al, Sn, Cr, V, Ti, Mg, Ca, Sr, B, Ga, In, Si, and Ge, an alkali metal-nickel composite oxide represented by the formula:

$$MNi_{1-c} M^2_c O_2$$

wherein M is at least one metal selected from the group consisting of Li, Na and K, $0 \leq c \leq 0.5$, and $M^2$ is at least one metal selected from the group consisting of Fe, Co, Mn, Cu, Zn, Al, Sn, Cr, V, Ti, Mg, Ca, Sr, B, Ga, In, Si, and Ge, or an alkali metal-cobalt composite oxide represented by the formula:

$$MCo_{1-d} M^3_d O_2$$

wherein M is at least one metal selected from the group consisting of Li, Na and K, $0 \leq d \leq 0.5$, and $M^3$ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, $MCoO_2$, $MMnO_2$, $MNiO_2$, $MMn_2O_4$, $MNi_{0.8}Co_{0.15}Al_{0.05}O_2$, $MNi_{1/3}Co_{1/3}Mn_{1/3}O_2$ and the like are preferable, and a compound represented by the following general formula (3) is preferred:

$$MNi_hCo_iMn_jM^5_kO_2 \qquad (3)$$

wherein M is at least one metal selected from the group consisting of Li, Na and K; $M^5$ represents at least one selected from the group consisting of Fe, Cu, Zn, Al, Sn, Cr, V, Ti, Mg, Ca, Sr, B, Ga, In, Si, and Ge, $(h+i+j+k)=1.0$, $0 \leq h \leq 1.0$, $0 \leq i \leq 1.0$, $0 \leq j \leq 1.5$, and $0 \leq k \leq 0.2$.

Examples of the alkali metal-containing transition metal phosphate compound include compounds represented by the following formula (4):

$$M_eM^4_f(PO_4)_g \qquad (4)$$

wherein M is at least one metal selected from the group consisting of Li, Na and K, $M^4$ is at least one selected from the group consisting of V, Ti, Cr, Mn, Fe, Co, Ni, and Cu, $0.5 \leq e \leq 3$, $1 \leq f \leq 2$, and $1 \leq g \leq 3$. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as $LiFePO_4$, $Li_3Fe_2(PO_4)_3$, and $LiFeP_2O_7$, cobalt phosphates such as $LiCoPO_4$, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include $MFePO_4$, $MNi_{0.8}Co_{0.2}O_2$, $M_{1.2}Fe_{0.4}Mn_{0.4}O_2$, $MNi_{0.5}Mn_{1.5}O_2$, $MV_3O_6$, and $M_2MnO_3$ (where M is at least one metal selected from the group consisting of Li, Na and K) and the like. In particular, positive electrode active materials such as $M_2MnO_3$ and $MNi_{0.5}Mn_{1.5}O_2$ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of $M_2MnO_3$ with $MM^6O_2$ (where M is at least one metal selected from the group consisting of Li, Na and K, and $M^6$ is a transition metal such as Co, Ni, Mn, or Fe), and the like.

Examples of the solid solution material include alkali metal-manganese oxides represented by the general formula $M_x[Mn_{(1-y)}M^7_y]O_z$. Here, M is at least one metal selected from the group consisting of Li, Na and K, and $M^7$ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of $1 < x < 2$, $0 \leq y < 1$, and $1.5 < z < 3$. Among them, a manganese-containing solid solution material such as $Li_{1.2}Mn_{0.5}Co_{0.14}Ni_{0.14}O_2$ in which $Li_2MnO_3$ is dissolved as a solid solution in a base of $LiNiO_2$ or $LiCoO_2$ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably 0.1% by mass or more, more preferably 0.3% by mass or more, and further preferably 0.5% by mass or more, based on the total of the positive electrode active material and lithium phosphate. The upper limit is preferably 10% by mass or less, more preferably 8% by mass or less, and further preferably 5% by mass or less, based on the total of the positive electrode active material and lithium phosphate.

Examples of the conductive polymer include p-doping type conductive polymers and n-doping type conductive polymers. Examples of the conductive polymer include polyacetylene-based polymers, polyphenylene-based polymers, heterocyclic polymers, ionic polymers, ladder and network polymers, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably 0.1 ppm or more, more preferably 1 ppm or more, and further preferably 10 ppm or more, and the upper limit is preferably 20% or less, more preferably 10% or less, and further preferably 5% or less. The surface-attached substance can inhibit an oxidation reaction between the electrolytic solution at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 $g/cm^3$ or more, more preferably 0.8 $g/cm^3$ or more, and further preferably 1.0 $g/cm^3$ or more. If the tapped density of the positive electrode active material is lower than this lower limit, the required amounts of the conductive material and the binder required for forming the positive electrode active material layer may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. However, although there is no upper limit, if the tapped density is too large, the diffusion of lithium ions in the positive electrode active material layer using the electrolytic solution as a medium becomes rate-determining, and the load characteristics tend to deteriorate. Therefore, the upper limit is preferably 4.0 $g/cm^3$ or less, more preferably 3.7 $g/cm^3$ or less, and further preferably 3.5 $g/cm^3$ or less.

In the present disclosure, the tapped density is determined as the powder filling density (tapped density) $g/cm^3$ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 $\mu$m or more, more preferably 0.5 $\mu$m or more, further preferably 0.8 $\mu$m or more, and most preferably 1.0 $\mu$m or more, and is preferably 30 $\mu$m or less, more preferably 27 $\mu$m or less, further preferably 25 $\mu$m or less, and most preferably 22 $\mu$m or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 $\mu$m or more, more preferably 0.1 $\mu$m or more, and further preferably 0.2 $\mu$m or more. The upper limit is preferably 5 $\mu$m or less, more preferably 4 $\mu$m or less, further preferably 3 $\mu$m or less, and most preferably 2 $\mu$m or less. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 $m^2/g$ or more, more preferably 0.2 m²/g or more, and further preferably 0.3 m²/g or more. The upper limit is preferably 50 m²/g or less, more preferably 40 m²/g or less, and further preferably 30 m²/g or less. The BET specific surface area smaller than this range may result in decreased battery performance, whereas the BET specific surface area larger than this range may result in difficulty in increase of the tapped density, which are problematic.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large lithium ion secondary battery for a hybrid automobile or a distributed power source, a high output is required, and it is preferred that the particles of the positive electrode active material are mainly secondary particles.

The particles of the positive electrode active material preferably include 0.5 to 7.0% by volume of fine particles having an average secondary particle size of 40 $\mu$m or less and an average primary particle size of 1 $\mu$m or less. By containing fine particles with an average primary particle size of 1 $\mu$m or less, the contact area with the electrolytic solution increases, so the diffusion of lithium ions between the electrode mixture and the electrolytic solution can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, $Li_2CO_3$, or $LiNO_3$ is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of $LiCoO_2$ and a ternary system such as $LiNi_{0.33}Co_{0.33}Mn_{0.33}O_2$, a combination of $LiCoO_2$ and $LiMn_2O_4$ or a material in which a part of the Mn are replaced with another transition metal or the like, or a combination of $LiFePO_4$ and $LiCoO_2$ or a material in which a part of the Co are replaced with another transition metal or the like.

From the viewpoint of high battery capacity, the content of the positive electrode active material in the positive electrode mixture is preferably 50 to 99.5% by mass, and more preferably 80 to 99% by mass.

Further, the content of the positive electrode active material is preferably 80% by mass or more, more preferably 82% by mass or more, and particularly preferably 84% by mass or more. The upper limit is preferably 99% by mass or less, and more preferably 98% by mass or less. If the content of the positive electrode active material in the positive electrode mixture layer is low, the electric capacity may be insufficient. Conversely, if the content is too high, the strength of the positive electrode may be insufficient.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, $Li_4Ti_5O_{12}$, and the like, or a mixture of two or more types of these. Among them, those at least partially including a carbonaceous matter material and silicon-containing compounds can be particularly preferably used.

It is preferred that the negative electrode active material used in the present disclosure includes silicon as the constituent element. When silicon is included as the constituent element, a battery having a high capacity can be produced.

The materials including silicon are preferably silicon particles, a particle having a structure in which silicon fine particles are dispersed in a silicon compound, a silicon oxide particle represented by the general formula SiOx ($0.5 \leq x \leq 1.6$), or mixtures thereof. Use of these particles can provide a negative electrode mixture for a lithium ion secondary battery having a higher initial charge/discharge efficiency, a high capacity, and excellent cycle characteristics.

The silicon oxide in the present disclosure is a collective term for amorphous oxides of silicon, and silicon oxide before disproportionation is represented by the general formula SiOx ($0.5 \leq x \leq 1.6$). x is preferably $0.8 \leq x < 1.6$, and more preferably $0.8 \leq x < 1.3$. The silicon oxide can be obtained by, for example, cooling and depositing a silicon monoxide gas generated when a mixture of silicon dioxide and metal silicon is heated.

The particle having a structure in which silicon fine particles are dispersed in a silicon compound can be obtained by, for example, a method of firing a mixture of silicon fine particles and a silicon compound, or carrying out disproportionation reaction in which silicon oxide particles before disproportionation represented by the general formula SiOx are heated in an inert non-oxidizing atmosphere such as argon at a temperature of 400°C or more, and preferably at 800 to 1,100°C. A material obtained by the latter method is preferred because silicon fine particles are homogeneously dispersed. The disproportionation reaction as described above enables the size of silicon nanoparticles to be 1 to 100 nm. It is desirable that the silicon oxide in a particle having a structure in which silicon nanoparticles are dispersed in silicon oxide is silicon dioxide. Dispersed silicon nanoparticles (crystals) in amorphous silicon oxide can be observed using a transmission electron microscope.

Physical properties of the particle including silicon can be appropriately selected according to an intended composite particle. For example, the average particle size is preferably 0.1 to 50 $\mu$m, and the lower limit is more preferably 0.2 $\mu$m or more, and further preferably 0.5 $\mu$m or more. The upper limit is more preferably 30 $\mu$m or less, and further preferably 20 $\mu$m or less. The average particle size used in the present disclosure is expressed in the weight average particle size when particle size distribution is measured by laser diffraction.

The BET specific surface area of the particle including silicon is preferably 0.5 to 100 $m^2$/g, and more preferably 1 to 20 $m^2$/g. With a BET specific surface area of 0.5 $m^2$/g or more, there is no risk of decrease in battery characteristics caused by decreased adhesiveness upon application to an electrode. With a BET specific surface area of 100 $m^2$/g or less, the proportion of silicon dioxide on the particle surface is higher, resulting in no risk of decrease in a battery capacity upon use as the negative electrode material for a lithium ion secondary battery.

Coating the above particle including silicon with carbon imparts the electric conductivity and improves battery characteristics. Examples of the method for imparting the electric conductivity include a method of mixing with electric conductive particles such as graphite, a method of coating the surface of the above particle including silicon with a carbon coat, and a method of combining both of the above methods. The method of coating with a carbon coat is preferred, and the method of coating is more preferably chemical vapor deposition (CVD).

To increase the capacity of the obtained electrode mixture, the content of the negative electrode active material in the electrode mixture is preferably 40% by mass or more, more preferably 50% by mass or more, and particularly preferably 60% by mass or more. The upper limit is preferably 99% by mass or less, and more preferably 98% by mass or less.

(Other components)

The composition for producing an electrode may further include a thermoplastic resin. Examples of the thermoplastic resin include vinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually 3.0% by mass or less, preferably 2.5% by mass or less, and more preferably 2.0% by mass or less. By adding a thermoplastic resin, the mechanical strength of the electrode can be improved. If this range is exceeded, the proportion of the electrode active material in the electrode mixture will decrease, which may cause problems such as a decrease in battery capacity and an increase in resistance between active materials.

(Method for producing an electrode)

The method for producing an electrode of the present disclosure preferably uses the composition for producing an electrode obtained by mixing each of the components mentioned above and prepares this into a sheet. For the preparation of a sheet, it is preferred to carry out a method that reduces an amount of a liquid medium used or does not use a liquid medium at all to eliminate the drying step and applies shear stress to a powder composition for producing an electrode without preparing a slurry. Additionally, a small amount of a solvent may be added as a lubricant to relieve load on an apparatus. The solvent is desirably an organic solvent, and the content of the solvent relative to the composition for producing an electrode is preferably 10% by mass or less, more preferably 5% by mass or less, and further preferably 3% by mass or less. The lower limit of the above content of the solvent is not limited and is preferably 0.5% by mass or more.

Examples of the solvent to be contained include those capable of dissolving a thermoplastic resin in an electrode mixture such as N-methyl-2-pyrrolidone, butyl butyrate, and acetone. Additional examples include those usable as a component in an electrolytic solution such as carbonates, ether compounds, and ionic liquids. Ionic liquids are particularly preferable from the viewpoint of improving battery performance.

It is known that when a shear force is applied to PTFE in the form of a powder, the fibrillation is easily achieved. By utilizing this property of readily forming fibrils, PTFE can be used as a binder. That is, the fibrillated PTFE entangles other powder components and the like to bind the powder components, thereby PTFE acts as a binder upon forming of the powder components.

Even when fibrillated PTFE is used as a binder, if the fibrillation is not sufficient, a good performance cannot be exhibited when used as an electrode mixture. When the PTFE is preferably formed into fine fibrils so as to have a fibrous structure with a fibril diameter (median value) (hereinafter, simply described as "fibril diameter") of 20 nm or more, such a fibrillated PTFE exhibits a good performance as a binder for the electrode mixture.

It is preferred that the electrode obtained by the production method of the present disclosure has, as a constituent element, PTFE having a fibrous structure with a fibril diameter (median value) of 20 nm or more. In the present disclosure, it is preferred that the fibril diameter (median value) is 20 nm or more. Thus, it is preferable from the viewpoint that PTFE with a small fibril diameter is present in the electrode which acts to bind the powders of the components constituting the electrode and provides flexibility.

The fibril diameter (median value) is a value measured by the following method.

(1) Using a scanning electron microscope (Model S-4800, manufactured by Hitachi, Ltd.), an enlarged photograph (7,000x) of the electrode mixture sheet is taken to obtain an image.
(2) Two lines equidistant from each other are drawn on the image in the horizontal direction to divide the image into three equal parts.
(3) The diameter of each PTFE fiber on the upper straight line is measured at three locations, and the average value is taken as the PTFE fiber diameter. The three locations to be measured are the intersection between the PTFE fiber and the straight line, and the locations 0.5 $\mu$m above and below the intersection (PTFE primary particles not formed into fibrils are excluded).
(4) The task of (3) above is then carried out for all the PTFE fibers on the lower straight line.
(5) Starting from the first image, the electrode mixture sheet is moved 1 mm in the right direction of the screen, photographed again, and the diameter of the PTFE fibers is measured according to the above (3) and (4). This is repeated until the number of fibers measured exceeds 80, and then the measurement is terminated.
(6) The median value of the diameters of all the PTFE fibers measured above is taken as the size of the fibril diameter.

The fibril diameter is preferably 15 nm or more, preferably 20 nm or more, and more preferably 31 nm or more. It should be noted that excessive fibril formation tends to result in loss of flexibility. Although the upper limit is not limited, from the viewpoint of flexibility, the upper limit is preferably, for example, 150 nm or less, and more preferably 100 nm or less, and particularly preferably 75 nm or less.

Examples of the method for obtaining PTFE having the above-described fibril diameter include, but are not limited thereto, a method including: a step (2) of applying a shear force while mixing the composition for producing an electrode to obtain an electrode mixture; a step (3) of forming the electrode mixture obtained in step (2) into a bulk shape; and a step (4) of rolling the bulk-shape electrode mixture obtained in step (3) into a sheet shape.

The step (2) is a step of applying a shear force while mixing the composition for producing an electrode obtained in step (1) to obtain an electrode mixture. The powder components for preparing the composition for producing an electrode are mixed and a shear force is applied at the same time while mixing to fibrillate PTFE, thereby obtaining an electrode mixture.

In such a method, for example, by setting the mixing condition of the composition for producing an electrode to 2,000 rpm or less in step (2), the fibrillation of the PTFE can be advanced while maintaining flexibility, and by controlling the shear stress to be applied, the fibril diameter of the PTFE can be made 20 nm or more.

As described above, the content of the solvent in the composition for producing an electrode in step (2) is preferably 10% by mass or less. The content of the solvent described above of 10% by mass or less is preferable because the drying step can be eliminated and the productivity is improved.

Further, it is also preferable to have after the step (4) a step (5) of applying a larger load to the obtained roll sheet and rolling into a thinner sheet. It is also preferred to repeat step (5).

In addition, after the step (4) or step (5), the fibril diameter can be adjusted by having a step (6) of coarsely crushing the obtained roll sheet, then again forming into a bulk shape and rolling into a sheet. The step (6) is preferably repeated, for example, 1 or more times and 12 or less times.

That is, the electrode mixture can be produced by applying a shear force to fibrillate the PTFE, which becomes entangled with the powder components such as the electrode active material. This production method is described later.

In the method for producing an electrode of the present disclosure, the content of PTFE is, in the proportion of PTFE in the electrode mixture, usually 0.1% by mass or more, preferably 0.5% by mass or more, and further preferably 1.0% by mass or more, and usually 50% by mass or less, preferably 10% by mass or less, further preferably 8% by mass or less, and most preferably 1.8% by mass or less. If the PTFE proportion is too low, the active material cannot be retained sufficiently, and the mechanical strength of the electrode is insufficient, which may cause a battery performance such as cycle characteristics to worsen. On the other hand, if the binder proportion is too high, this may lead to a decrease in battery capacity and electric conductivity.

The electrode mixture of the present disclosure can be used as the electrode mixture for a secondary battery. The electrode mixture of the present disclosure is suitable for a lithium ion secondary battery.

The electrode mixture of the present disclosure is typically used in sheet form when used in a secondary battery.

An example of a specific method for producing the electrode mixture sheet including the electrode mixture is as follows.

In the method for producing an electrode of the present disclosure, the electrode mixture sheet can be obtained by a method for producing an electrode mixture sheet for a secondary battery having:

> a step (0) of preparing a mixture including an electrode active material and optionally a conductive aid;
> a step (1) of preparing a composition for producing an electrode including a binder in the mixture obtained in step (0);
> a step (2) of applying a shear force while mixing the composition for producing an electrode to obtain an electrode mixture;
> a step (3) of forming the electrode mixture obtained in step (2) into a bulk shape; and
> a step (4) of rolling the bulk-shape electrode mixture obtained in step (3) into a sheet shape.

At the stage of applying a shear force while mixing the composition for producing an electrode in step (2), the electrode active material, binder, and the like are simply mixed and are present in an undetermined form. Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, and the like.

In step (2), the mixing conditions may be appropriately set in terms of rotation speed and mixing time. For example, the number of revolutions is preferably 2,200 rpm or less. The number of revolutions is in the range of preferably 10 rpm or more, more preferably 15 rpm or more, and further preferably 20 rpm or more. The number of revolutions is in the range of preferably 2000 rpm or less, more preferably 1800 rpm or less, and further preferably 1500 rpm or less. If the number of rotations is less than the above range, the mixing takes time, which affects productivity. On the other hand, if the number of rotations exceeds the above range, excessive fibrillation may occur, resulting in an electrode mixture sheet with inferior strength and flexibility.

In step (3), forming into a bulk shape means forming the composition for producing an electrode into one mass.

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter of the cross section or the minimum size is 10,000 $\mu$m or more, and more preferably 20,000 $\mu$m or more.

Examples of the specific rolling method in step (4) include a method of rolling using a roll press machine, a flat plate press machine, a calender roll machine, or the like.

Moreover, it is also preferable to have, after the step (4), a step (5) of applying a larger load to the obtained roll sheet and rolling it into a thinner sheet. It is also preferable to repeat step (5). In this way, the flexibility is improved by rolling the sheet little by little in stages instead of thinning the roll sheet all at once.

The number of times that step (5) is carried out is preferably 2 or more and 10 or less, and more preferably 3 or more and 9 or less.

A specific rolling method is to, for example, rotate two or a plurality of rolls and pass the roll sheet between the rolls to form a thinner sheet. Heating is desirable when rolling. The lower limit of temperature ranges is preferably 40°C or more, more preferably 50°C or more, and further preferably 60°C or more. The upper limit is preferably 300°C or less, more preferably 250°C, or less and further preferably 200°C or less. Heating allows the sheet to be soften and easily rolled.

Further, from the viewpoint of adjusting the fibril diameter, it is preferable to have, after step (4) or step (5), a step (6) of coarsely crushing the roll sheet, then again forming into a bulk shape, and rolling into a sheet. It is also preferable to repeat step (6). The number of times that step (6) is carried out is preferably 1 time or more and 12 times or less, and more preferably 2 times or more and 11 times or less.

In step (6), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (4) or step (5) into another form for rolling into a sheet shape in the next step, and may include a case of simply folding a roll sheet.

Step (5) may be performed after step (6), or may be performed repeatedly.

Further, uniaxial stretching or biaxial stretching may be carried out in step (3) as well as steps (4), (5), and (6).

In addition, the fibril diameter can also be adjusted by the degree of coarse crushing in step (6).

In the above steps (4), (5), or (6), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a composition for producing an electrode in a bulk shape or a composition for producing an electrode in a sheet shape. The thickness of the sample refers to the thickness in the direction in which a load is applied during rolling.

As described above, PTFE powder is fibrillated by applying a shearing force. In order to have a fibrous structure with a fibril diameter of 20 nm or more, if the shear stress is excessive, excessive fibrillation may proceed, which impairs flexibility. Further, if shear stress is weak, strength may not be sufficient. For this reason, during mixing and rolling, the resin is rolled and stretched into a sheet by applying an appropriate shear stress to the PTFE to promote fibrillation, whereby a fibrous structure with a fibril diameter of 20 nm or more can be obtained.

The electrode mixture sheet of the present disclosure can be used as the electrode mixture sheet for a secondary battery. The electrode mixture sheet can be either for a positive electrode or for a negative electrode. The electrode mixture sheet of the present disclosure is particularly suitable for a lithium ion secondary battery.

(Positive electrode)

In the present disclosure, it is preferable that the positive electrode is constructed from a current collector and the above-described electrode mixture sheet including a positive electrode active material.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 $\mu$m or more, preferably 3 $\mu$m or more, and more preferably 5 $\mu$m or more, and usually 1 mm or less, preferably 100 $\mu$m or less, and more preferably 50 $\mu$m or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The thickness ratio of the current collector to the positive electrode mixture is not limited, but a value obtained by (one side of thickness of positive electrode mixture sheet immediately before injecting an electrolytic solution)/(thickness of current collector) is in the range of preferably 20 or less, more preferably 15 or less, and most preferably 10 or less, and preferably 0.5 or more, more preferably 0.8 or less, and most preferably 1 or more. If the thickness ratio exceeds this range, a current collector may generate heat by Joule heat during charge/discharge at high current densities. If the thickness ratio is less than this range, a volume ratio of a current collector to the positive electrode active material increases, and a battery capacity may decrease.

The positive electrode may be produced according to a conventional method. For example, a method of laminating the electrode mixture sheet and the current collector with an adhesive between them and drying the laminate can be used.

The density of the positive electrode mixture sheet is preferably 3.00 g/cm$^3$ or more, more preferably 3.10 g/cm$^3$ or more, and further preferably 3.20 g/cm$^3$ or more, and preferably 3.80 g/cm$^3$ or less, more preferably 3.75 g/cm$^3$ 3 or less, and further preferably 3.70 g/cm$^3$ or less. If the density exceeds this range, the penetration of the electrolytic solution near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

It is preferred that the area of the positive electrode mixture sheet, from the viewpoint of enhancing the stability at a high output and a high temperature, is larger than the outer surface area of a battery exterior case. Specifically, the sum of electrode mixture areas at the positive electrode to the surface area of a secondary battery exterior is preferably 15 times or more in terms of area ratio, and further, more preferably 40 times or more. The outer surface area of a battery exterior case refers to, in the case of a rectangular shape having closed bottom, the total area determined by calculation from the dimension of length, width, and thickness of the case portion in which power generation elements, excluding the projecting part of terminals, are packed. In the case of a cylindrical shape having closed bottom, the outer surface area of a battery exterior case refers to the geometric surface area of the approximate cylinder, which is the case portion in which power generation elements, excluding the projecting part of terminals, are packed. The sum of electrode mixture areas at the positive electrode refers to the geometric surface area of positive electrode mixture layer opposite to the mixture layer including the negative electrode active material, and in the structure in which a positive electrode mixture layer is formed on both sides of a current collector foil, the sum of electrode mixture areas at the positive electrode refers to the sum of areas obtained by separately calculating each side.

The thickness of the positive electrode is not limited, but from the viewpoint of a high capacity and a high output, the thickness of the mixture sheet after subtracting the thickness of the current collector is, as the lower limit for one side of the current collector, preferably 10 $\mu$m or more, and more preferably 20 $\mu$m or more, and as the upper limit, preferably 500 $\mu$m or less, and more preferably 450 $\mu$m or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

(Negative electrode)

In the present disclosure, it is preferable that the negative electrode is constructed from a current collector and the above-described electrode mixture sheet including a negative electrode active material.

Examples of the material of the current collector for the negative electrode include metals such as copper, nickel, titanium, tantalum, and stainless steel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 $\mu$m or more, preferably 3 $\mu$m or more, and more preferably 5 $\mu$m or more, and usually 1 mm or less, preferably 100 $\mu$m or less, and more preferably 50 $\mu$m or less. If the metal foil is thinner than this range, it may lack the strength required as a current collector. Conversely, if the metal foil is thicker than this range, handleability may be impaired.

The negative electrode may be produced according to a conventional method. For example, a method of laminating the electrode mixture sheet and the current collector with an adhesive between them and vacuum drying the laminate can be used.

The density of the negative electrode mixture sheet is preferably 1.3 g/cm$^3$ or more, more preferably 1.4 g/cm$^3$ or more, and further preferably 1.5 g/cm$^3$ or more, and preferably 2.0 g/cm$^3$ or less, more preferably 1.9 g/cm$^3$ or less, and further preferably 1.8 g/cm$^3$ or less. If the density exceeds this range, the penetration of the electrolytic solution near the interface between the current collector/the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the thickness of the mixture sheet after subtracting the thickness of the current collector is, as the lower limit for one side of the current collector, preferably 10 $\mu$m or more, and more preferably 20 $\mu$m or more, and us the upper limit, preferably 500 $\mu$m or less, and more preferably 450 $\mu$m or less.

(Element ratio of fluorine to carbon (F/C ratio))

The binder of the present disclosure has, in the electrode mixture sheet, an element ratio of fluorine to carbon (F/C ratio) of preferably 0.40 or more and 3.00 or less, and more preferably 0.50 or more and 2.50 or less. When this ratio is within these ranges, it is preferable from the viewpoint that an electrode with high strength and low electrode resistance can be produced. The elemental analysis is the value measured by a usual common method. Specifically, an F/C ratio can be determined by, for example, measuring CHN at the same time using MICRO CORDER JM10 (manufactured by J Science Lab Co., Ltd.) under the conditions of 2 mg of a sample volume, 950°C of combustion furnace, 550°C of reduction furnace, 200 mL/min of a helium flow rate, and 15 to 25 mL/min of an oxygen flow rate, and averaging the values obtained from four measurements.

$$\text{F/C Ratio} = \text{average F (wt\%)/average C (wt\%)}$$

(Secondary battery)

The electrode produced by the method for producing a secondary battery electrode of the present disclosure can be used as a positive electrode or a negative electrode of various secondary batteries. The secondary batteries refer to those that use a non-aqueous electrolytic solution, and examples include lithium ion batteries.

(Electrolytic solution)

Nonaqueous electrolytic solution usable is a solution in which a known electrolyte salt is dissolved in a known organic solvent for dissolving an electrolyte salt.

The organic solvent for dissolving an electrolyte salt is not limited, and includes one or more kinds of known hydrocarbon solvents such as propylene carbonate, ethylene carbonate, butylene carbonate, $\gamma$-butyrolactone, 1,2-dimethoxyethane, 1,2-diethoxyethane, dimethyl carbonate, diethyl carbonate, and ethyl methyl carbonate; and fluorinated solvents such as fluoroethylene carbonate, fluoro ether, and fluorinated carbonate.

Examples of electrolyte salt include $LiClO_4$ $LiAsF_6$, $LiBF_4$, $LiPF_6$, $LiN(SO_2CF_3)_2$, and $LiN(SO_2C_2F_5)_2$, with $LiPF_6$, $LiBF_4$, $LiN(SO_2CF_3)_2$, $LiN(SO_2C_2F_5)_2$ or combinations thereof being particularly preferred due to good cycle characteristics.

The concentration of the electrolyte salt needs to be 0.8 mol/L or more, and further 1.0 mol/L or more. The upper limit depends on the organic solvent for dissolving an electrolyte salt, but is usually 1.5 mol/L or less.

(Battery design)

The electrode mixture unit may be either a laminated structure including the above-described positive electrode and negative electrode with a separator therebetween, or a wound structure including the above-described positive electrode and negative electrode with the above-described separator therebetween.

(Separator)

It is preferred that the secondary battery of the present disclosure further includes a separator.

The material and shape of the above separator are not limited as long as it is stable with an electrolytic solution and good in liquid retaining property, and a known material and shape can be used. Among them, a resin, a glass fiber, an inorganic matter, and the like formed with a material stable with the electrolytic solution used in the present disclosure or the electrolytic solution used in the alkali metal secondary battery of the present disclosure are used, and it is preferred to use such a material in the form of a porous sheet or a nonwoven fabric having excellent liquid retaining property.

The usable material for resin or glass fiber separators is, for example, polyolefins such as polyethylene and polypropylene, aromatic polyamide, PTFE, polyethersulfone, or a glass filter. These materials may be used singly, or 2 or more may be used in any combination and ratio such as a polypropylene/polyethylene 2-layer film, a polypropylene/-polyethylene/polypropylene 3-layer film, and the like.

Among them, it is preferred that the above-described separator is a porous sheet, a nonwoven fabric, or the like having polyolefins such as polyethylene, and polypropylene as a raw material, from the viewpoint of good penetration of and shutdown effect on the electrolytic solution.

The thickness of the separator is selectable, and is usually 1 $\mu$m or more, preferably 5 $\mu$m or more, and further preferably 8 $\mu$m or more, and usually 50 $\mu$m or less, preferably 40 $\mu$m or less, and further preferably 30 $\mu$m or less. If the separator is thinner than the above range, insulating property or mechanical strength may decrease. If the separator is thicker than the above range, not only the battery performance such as rate characteristics may decrease, but also the energy density of an electrolytic solution battery as a whole may decrease.

Further, when a porous material such as a porous sheet or a nonwoven fabric is used as the separator, the porosity of the separator is selectable, and usually 20% or more, preferably 35% or more, and further preferably 45% or more, and usually 90% or less, preferably 85% or less, and further preferably 75% or less. If the porosity is lower than the above range, membrane resistance tends to increase thereby worsening rate characteristics. If the porosity is higher than the above range, the mechanical strength of the separator tends to decrease and thereby decreasing the insulating property.

The average pore size of the separator is also selectable, and is usually 0.5 $\mu$m or less, and preferably 0.2 $\mu$m or less, and usually 0.05 $\mu$m or more. If the average pore size exceeds the above range, a short circuit easily occurs. If the average pore size is less than the above range, membrane resistance tends to increase thereby worsening rate characteristics.

The material usable for the inorganic matter is, for example, oxides such as alumina and silicon dioxide, nitrides such as aluminum nitride and silicon nitride, or sulfates such as barium sulfate and calcium sulfate, in particulate shape or fibrous shape.

Usable is a form in a thin-film shape such as a nonwoven fabric, a woven fabric, or a microporous film. A thin-film shape having a pore size of 0.01 to 1 $\mu$m and a thickness of 5 to 50 $\mu$m is suitably used. In addition to the above-described independent thin-film shape, a separator obtained by forming a composite porous layer containing particles of the above-described inorganic matter using a binder made of a resin on the outer layer of the positive electrode and/or negative electrode can be used. An example includes the formation of porous layers of alumina particles having a 90% particle size of less than 1 μm on both sides of a positive electrode using a fluororesin as the binder.

(Electrode mixture unit occupancy)

The battery that uses the electrode produced by the method for producing an electrode for a secondary battery of the present disclosure has the volume proportion of the electrode mixture unit in the battery internal volume (hereinafter, referred to as the electrode mixture unit occupancy) of usually 40% or more, and preferably 50% or more, and usually 90% or less, and preferably 80% or less.

If the electrode mixture unit occupancy is less than the above range, a battery capacity may decrease. If the electrode mixture unit occupancy exceeds the above range, a void space is small, an internal pressure increases when parts expand as a battery reaches a high temperature or a vapor pressure of electrolyte solution component increases thereby causing various characteristics as a battery such as charge/discharge repeating performance and high temperature storage to decrease, and further a gas purge valve for releasing an internal pressure to outside may operate.

The current collection structure is not limited, but is preferably a structure which reduces resistance at the wiring part and connecting part for more effectively achieving the enhancement of charge/discharge characteristics at high current densities by an electrolytic solution. When the internal resistance is thus reduced, the effect with the use of the electrolytic solution is particularly well exhibited.

When the electrode mixture unit has the above-described laminated structure, the structure obtained by bundling the metal core part of each electrode mixture layer and welding to terminal is suitably used. When one sheet of the electrode mixture area is larger, an internal resistance is higher where the reduction of resistance by providing a plurality of terminals in the electrode mixture is suitably used. When the electrode mixture unit has the above-described wound structure, an internal resistance can be reduced by providing the positive electrode and negative electrode respectively with a plurality of reed structures and bundling with terminals.

The material for exterior case is not limited as long as it is a material stable with the electrolytic solution to be used. Specifically, metals such as a nickel-plated steel plate, stainless steel, aluminum or an aluminum alloy, and a magnesium alloy, or a laminate film of a resin and an aluminum foil are used. Metals such as aluminum or an aluminum alloy, and a laminate film are suitably used from the viewpoint of weight saving.

Exterior cases using metals include a hermetically sealed structure obtained by welding metals by laser welding, resistance welding, or ultrasonic welding, or a "caulking structure" obtained by using the above-described metals with a resin gasket therebetween. The exterior case using the above-described a laminate film includes a hermetically sealed structure obtained by heat sealing the resin layers. For enhancing the sealability, a different resin from the resin used for the laminate film may be interposed between the above-described resin layers. Particularly, in the case of obtaining a sealed structure by heat sealing resin layers with current collecting terminals therebetween, the metal and resin are bonded where a resin having a polar group or a modified resin into which a polar resin is introduced is suitably used as a resin to be interposed.

The shape of the secondary battery of the present disclosure is selectable, and examples include a cylindrical shape, a rectangular shape, a laminate, a coin shape, a large shape, and the like. The shape and structure of the positive electrode, negative electrode, and separator can be optionally altered and used to suit the shape of various batteries.

Examples

Hereinafter, the present disclosure will be specifically described based on examples.

In the following examples, "parts" and "%" represent "parts by mass" and "% by mass", respectively, unless otherwise specified.

[Production Example 1]

An aqueous dispersion of PTFE (solid content 31.2% by mass), PTFE-A, was obtained by referring to Production Example 2 of International Publication No. WO 2015-080291. The standard specific gravity obtained in the measured result was 2.16.

[Production Example 2]

An aqueous dispersion of PTFE (solid content 30.9% by mass), PTFE-B, was obtained by referring to Production Example 3 of International Publication No. WO 2015-080291. The amount of fluorine-containing surfactant used relative to the final PTFE yield was 3,290 ppm. The standard specific gravity obtained in the measured result was 2.15.

[Production Example 3]

An aqueous dispersion of modified PTFE, PTFE-C, was obtained by referring to Production Example 1 of International Publication No. WO 2012/086710. The obtained aqueous dispersion had a polymer concentration of 30.1% by mass, and an average primary particle size of 0.18 μm. The standard specific gravity obtained in the measured result was 2.16.

[Production Example 4]

An aqueous dispersion of PTFE particles, PTFE-D, was obtained by referring to Preparation 1 of International Publication No. WO 2012-063622. The standard specific gravity obtained in the measured result was 2.19.

0.25 g of Li-100 (acetylene black) as a conductive aid was weighed and ultrapure water was added as a solvent, and these were stirred in a mixer at 2,000 rpm for 3 minutes to prepare a dispersion of the conductive aid. Subsequently, 4.75 g of the aqueous dispersion PTFE-A as a solid content was added, and ultrapure water was further added to adjust the concentration of the solid content. The final amount of the solvent was 45 g, and then the resultant was stirred using a mix rotor for 1 hour to prepare a mixed solution. Then, a spray dryer (manufactured by TOKYO RIKAKIKAI CO., LTD.) was used to obtain a dry powder (140°C of inlet temperature, 0.60 cubic meter/min of an air volume, 5.5 g/min of a flow rate). Further, vacuum drying (100°C, 8 hours) was carried out to obtain binder 1.

As shown in Table 1, the type and amount of the aqueous dispersion of PTFE, the type and amount of the conductive aid, and the amount of the solvent were changed to obtain binders 2 to 11.

The moisture contents of binders 1 to 11 obtained in the measured results were all 250 PPM or less.

[Table 1]

| Binder | Aqueous dispersion | Aqueous dispersion solid content [g] | Type of conductive aid | Conductive aid solid content [g] | Total amount of water [g] | F/C Element ratio |
|--------|--------|--------|--------|--------|--------|--------|
| Binder 1 | PTFE-A | 4.75 | Li-100 | 0.25 | 45.00 | 1.87 |
| Binder 2 | PTFE-A | 2.50 | Li-100 | 2.50 | 78.33 | 0.43 |
| Binder 3 | PTFE-A | 3.75 | Li-100 | 1.25 | 57.50 | 1.00 |
| Binder 4 | PTFE-A | 4.00 | Super-P Li | 1.00 | 78.33 | 1.14 |
| Binder 5 | PTFE-B | 4.00 | Super-P Li | 1.00 | 78.33 | 1.16 |
| Binder 6 | PTFE-C | 4.00 | Super-P Li | 1.00 | 78.33 | 1.16 |
| Binder 7 | PTFE-D | 4.00 | Super-P Li | 1.00 | 78.33 | 1.14 |
| Binder 8 | PTFE-A | 4.90 | FT7000 | 0.10 | 57.50 | 2.32 |
| Binder 9 | PTFE-C | 4.90 | FT7000 | 0.10 | 57.50 | 2.32 |
| Binder 10 | PTFE-A | 4.75 | FT7000 | 0.25 | 70.00 | 1.80 |
| Binder 11 | PTFE-C | 4.00 | Carbon ECP | 1.00 | 85.00 | 1.10 |

[Production Example 5]

The aqueous dispersion PTFE-D obtained in Production Example 4 was diluted to a solid content concentration of 15%, and gently stirred in a container equipped with a stirrer in the presence of nitric acid to solidify the PTFE. The solidified PTFE was separated and dried at 160°C for 18 hours to obtain powdered PTFE-E free of the conductive aid.

(Example 1)

<Production of positive electrode mixture sheet>

$Li(Ni_{0.6}Mn_{0.2}Co_{0.2})O_2$ (abbreviation: NMC622) as the positive electrode active material and Li-100 as the conductive aid while considering the amount of the conductive aid contained in the binder to be added later were weighed and stirred in a mixer at 1,500 rpm for 10 minutes to obtain a mixture. The produced binder 1 was added to a container holding the mixture and stirred at 40 rpm for 2 hours in a kneader to obtain a mixed powder composition. The mass ratio of the formulation was adjusted to be positive electrode active material:PTFE:all conductive aids=95.5:2:2.5.

The obtained mixed powder composition was allowed to pass through between metal rolls arranged in parallel multiple times and rolled into a self-supporting electrode mixture sheet. The temperature of the metal rolls was set to 80°C. Then, a step of coarsely crushing the roll sheet obtained in the previous step by folding it in two, forming again into a bulk shape, and then rolling into a sheet shape using a metal roll on a hot plate heated to 80°C to form fibrils was repeated four times. After that, the sheet was further rolled to obtain a positive electrode mixture sheet with a thickness of about 500 $\mu$m. Further, the positive electrode mixture sheet was cut to 5 cm x 5 cm, put into a roll press heated to 80°C, and rolled. The thickness was adjusted by repeatedly applying a load of 2 kN to further form fibrils. The gap was adjusted so that the thickness of the final positive electrode mixture layer was 90 $\mu$m and the density thereof was 3.20 g/cc, thereby to obtain a positive electrode mixture sheet.

Each test was carried out as follows.

[Strength measurement]

Using a tensile tester (Autograph AGS-X Series AGS-100NX manufactured by Shimadzu Corporation), the strength of a strip-shaped electrode mixture sheet test piece with a width of 4 mm under the condition of 100 mm/min was measured. The chuck-to-chuck distance was 30 mm. Displacement was applied until breakage, and the maximum stress obtained in the measured results was taken as the strength of each sample. With the value of Comparative Example 1 being standardized as 100, the strength was compared.

[Electrode resistance measurement]

The positive electrode mixture sheet was cut to be a square having a width of 5.0 cm $\times$ a length of 10 cm to prepare a test piece. Using a resistivity gauge Loresta GP (manufactured by Mitsubishi Chemical Corporation), four-terminal resistance of the positive electrode active material layer was measured in accordance with JIS K7194; 1994. The lower a resistance value, excellent battery characteristics is indicated.

A: Less than 20 $\Omega$ cm
B: Less than 20 to 50 $\Omega$ cm
C: Less than 50 to 100 $\Omega$ cm
D: Less than 100 to 200 $\Omega$ cm
E: 200 or more

(Examples 2, 3)

Positive electrode mixture sheets were obtained in the same manner as in Example 1 except that the binders having the formulations shown in Table 1 were used.

(Examples 4 to 7)

Positive electrode mixture sheets were obtained in the same manner as in Example 1 except that the conductive aid mixed with NMC622 in the mixer was changed to Super-P Li (furnace black) and the binders having the formulations shown in Table 1 were used.

(Examples 8, 9)

Li(Ni$_{0.8}$Mn$_{0.1}$Co$_{0.1}$)O$_2$ (abbreviation: NMC811) as the positive electrode active material, Li-100 as the conductive aid, and binder 8 were used. The mass ratio of the mixed powder composition was adjusted to be positive electrode active material:PTFE:FT7000 (multi-walled carbon nanotubes having an average diameter of 7 to 11 nm and a length of 5 to 20 $\mu$m):Li-100=95.5:2:0.04:2.46. Other than that, positive electrode mixture sheet was obtained in the same manner as in Example 1. Example 9 was carried out in the same manner.

(Example 10)

NMC811 as the positive electrode active material, Li-100 as the conductive aid, and binder 10 were used. The mass ratio of the mixed powder composition was adjusted to be positive electrode active material:PTFE:FT7000:Li-100=95.5:2:0.11:2.34. Other than that, a positive electrode mixture sheet was obtained in the same manner as in Example 1.

(Example 11)

A positive electrode mixture sheet was obtained in the same manner as in Example 1 except that the conductive aid mixed with NMC 622 in the mixer was changed to carbon ECP (ketjen black) and the binder having the formulation shown in Table 1 was used.

(Example 12)

NMC 811 as the positive electrode active material and binder 5 were used. The mixed powder composition had a mass ratio of positive electrode active material:PTFE:all conductive aids=96:1.5:2.5. Other than that, a positive electrode mixture sheet was obtained in the same manner as in Example 1.

<Production of positive electrode>

The positive electrode mixture sheet was adhered to a 20 $\mu$m aluminum foil. The adhesive used was a slurry in which polyvinylidene fluoride (PVDF) was dissolved in N-methylpyrrolidone (NMP) and carbon nanotube (CNT) was dispersed. The adhesive mentioned above was applied to the aluminum foil, the produced sheet-shaped positive electrode mixture was put thereon so that air bubbles do not go therebetween, and vacuum dried at 120°C for 30 minutes to produce a positive electrode sheet integrated with a current collector.

<Production of electrolytic solution>

A mixed solvent of ethylene carbonate (EC) and ethyl methyl carbonate (EMC) (EC:EMC=30:70 (volume ratio)) as an organic solvent was weighed and put in a sample bottle, and 1% by mass each of fluoroethylene carbonate (FEC) and vinylene carbonate (VC) were dissolved therein to prepare an electrolytic solution. The concentration of $LiPF_6$ salt in the electrolytic solution was adjusted to 1.0 mol/L and mixed at 23°C to obtain an electrolytic solution.

<Production of battery>

The positive electrode sheet produced above and a polyethylene separator, and Li metal as the negative electrode were used to produce a coin battery. More specifically, the separator was sandwiched between the positive electrode and negative electrode in a dry room to prepare an electrode assembly battery. This electrode assembly battery was put in a battery case (a member for CR2032 coin battery) made of a stainless-steel container. An electrolytic solution was poured into the battery case. The battery case was hermetically sealed using a caulking machine thereby to obtain the non-aqueous electrolyte lithium ion secondary batteries of the examples.

[Initial discharging capacity test]

The lithium ion secondary batteries produced as described above were constant current-constant voltage charged (hereinafter referred to as CC/CV charge) (0.1C cut-off) at a current of 0.5C to 4.3 V at 25°C, and then discharged at a constant current of 0.5C to 3 V. With this procedure as 1 cycle, an initial discharging capacity was determined based on a discharging capacity from the 3rd cycle.
The initial capacity of a reference example was standardized as 100, and the capacities were compared.

(Comparative Example 1)

A non-aqueous electrolyte lithium ion secondary battery was obtained in the same manner as in Example 1 except that the powdered PTFE-E free of the conductive aid was used.

(Comparative Example 2)

A non-aqueous electrolyte lithium ion secondary battery was obtained in the same manner as in Example 1 except that the powdered PTFE-E free of the conductive aid was used and the conductive aid was changed to Super-P Li.

(Reference Example)

NMC811 as the positive electrode active material and Li-100 and FT7000 as the conductive aids were weight and stirred in a mixer at 1,500 rpm for 10 minutes to obtain a mixture. The produced powdered PTFE-E was added to a container holding the mixture and stirred at 40 rpm for 2 hours in a kneader to obtain a mixed powder composition. The mass ratio of the formulation was adjusted to be positive electrode active material:PTFE:FT7000:Li-100=95.5:2:0.04:2.46. An electrode mixture sheet was produced in the same procedure as in Example 8 to obtain a non-aqueous electrolyte lithium ion secondary battery.

(Comparative Example 3)

Li(Ni$_{0.8}$Mn$_{0.1}$Co$_{0.1}$)O$_2$(NMC811) as the positive electrode active material and Li-100 as the conductive aid were weighed and stirred in a mixer at 2,000 rpm for 10 minutes to obtain a mixture. The produced aqueous dispersion PTFE-D was added to a container holding the mixture and stirred at 40 rpm for 2 hours in a kneader to obtain a mixed powder composition. The mass ratio of the formulation was adjusted to be positive electrode active material:PTFE:conductive aid=95.5:2:2.5. Since aggregates were found in the dispersion before carrying out drying, spray drying was not carried out but drying was carried out on a hot plate at 110°C over a period of 1 hour. Vacuum drying (100°C, 8 hours) was further carried out to obtain a mixed powder composition. An electrode mixture sheet was produced in the same procedure as in Example 8 to obtain a non-aqueous electrolyte lithium ion secondary battery.

(Comparative Example 4)

A non-aqueous electrolyte lithium ion secondary battery was obtained in the same manner as in Example 12 except that the powdered PTFE-E free of the conductive aid was used.

[Table 2]

|  | Binder | Tensile strength | Electrode resistance |
|---|---|---|---|
| Comparative Example 1 | PTFE-E | 100 | E |
| Example 1 | Binder 1 | 120 | D |
| Example 2 | Binder 2 | 106 | A |
| Example 3 | Binder 3 | 110 | B |
|  |  |  |  |
| Comparative Example 2 | PTFE-E | 88 | E |
| Example 4 | Binder 4 | 106 | C |
| Example 5 | Binder 5 | 128 | C |
| Example 6 | Binder 6 | 110 | C |
| Example 7 | Binder 7 | 102 | C |
| Example 11 | Binder 11 | 115 | A |

[Table 3]

|  | Tensile strength | Electrode resistance | Initial capacity |
|---|---|---|---|
| Reference Example | 70 | C | 100 |
| Comparative Example 3 | 55 | E | 84 |
| Comparative Example 4 | 85 | E | 99 |
| Example 8 | 105 | A | 102 |
| Example 9 | 110 | A | 102 |
| Example 10 | 120 | A | 103 |
| Example 12 | 100 | B | 105 |

The median values of fibril diameters of Examples 1 and 3 in the measured results of the fibril diameter were 40 and 31 nm, respectively.
The median values of fibril diameters of Examples 4 and 5 in the measured results of the fibril diameter were 33 and 43 nm, respectively.

The median values of fibril diameters of Examples 9, 10, 11 and 12 in the measured results of the fibril diameter were 51, 67, 40, and 32 nm, respectively.

Comparative Example 1 and Examples 1 to 3 reveal that electrodes with a high tensile strength and low resistance can be produced.

Further, Comparative Example 2 and Examples 4 to 7 found preferred ranges of the conductive material and PTFE. Additionally, Comparative Example 3 and Example 8 found that the use of a binder that is a powder free of the electrode active material improves battery characteristics. In Example 12, the amount of the binder was reduced and the battery capacity was improved.

Industrial Applicability

The method for producing a secondary battery electrode using a non-aqueous electrolytic solution of the present disclosure can be used for the production of an electrode used for batteries such as lithium ion secondary batteries.

**Claims**

1. A method for producing a secondary battery electrode using a non-aqueous electrolytic solution, comprising:

    (1) preparing a powder composition for producing an electrode by using a binder that is a powder which is composed of a composition essentially including a polytetrafluoroethylene resin and a conductive aid and which is free of an active material, and
    (2) applying a shear force while mixing the composition for producing an electrode to obtain an electrode mixture,

    wherein step (2) is carried out with a content of a solvent in the composition for producing an electrode being 10% by mass or less.

2. The method for producing a secondary battery electrode according to claim 1, wherein the electrode mixture has a content of the polytetrafluoroethylene resin of 1.8% by mass or less.

3. The method for producing a secondary battery electrode according to claim 1 or 2, wherein the binder has a moisture content of 1,000 ppm or less.

4. The method for producing a secondary battery electrode according to any one of claims 1 to 3, wherein the binder is produced by a production method comprising (A) mixing a polytetrafluoroethylene resin and a conductive aid in the presence of a liquid medium.

5. The method for producing a secondary battery electrode according to claim 4, wherein the liquid medium is water.

6. The method for producing a secondary battery electrode according to claim 4 or 5, wherein the binder is obtained by a production method comprising (B) drying a composition obtained in step (A) by spray drying.

7. The method for producing a secondary battery electrode according to any one of claims 1 to 6, wherein the polytetrafluoroethylene resin has a standard specific gravity of 2.130 to 2.200.

8. The method for producing a secondary battery electrode according to any one of claims 1 to 7, wherein the composition for producing an electrode includes a positive electrode active material.

9. The method for producing a secondary battery electrode according to any one of claims 1 to 8, wherein the secondary battery is a lithium ion secondary battery.

10. The method for producing a secondary battery electrode according to any one of claims 1 to 9, wherein the polytetrafluoroethylene resin has a fibrous structure with a fibril diameter (median value) of 20 nm or more in a secondary battery electrode.

11. The method for producing a secondary battery electrode according to any one of claims 1 to 10, wherein the binder has an element ratio of fluorine to carbon (F/C ratio) of 0.4 or more and 3.0 or less as measured by elemental analysis.

12. A binder for a secondary battery electrode using a non-aqueous electrolytic solution, that is a powder which is composed of a composition essentially including a polytetrafluoroethylene resin and a conductive aid and which is free of an electrode active material,
wherein the polytetrafluoroethylene resin and the conductive aid are contained in a proportion of 90:10 to 65:35 in terms of weight ratio.

13. The binder for a secondary battery electrode according to claim 12, wherein the binder has a moisture content of 1,000 ppm or less.

14. The binder for a secondary battery electrode according to claim 12 or 13, wherein the binder has an element ratio of fluorine to carbon (F/C ratio) of 0.4 or more and 3.0 or less as measured by elemental analysis.

15. A binder for a secondary battery electrode using a non-aqueous electrolytic solution including a mixed powder of a polytetrafluoroethylene resin and ketjen black and/or a carbon nanotube.

16. A composition for producing an electrode, comprising the binder for a secondary battery electrode according to claim 15.

17. An electrode mixture comprising the binder for a secondary battery electrode according to claim 15.

18. An electrode comprising the electrode mixture according to claim 17.

## INTERNATIONAL SEARCH REPORT

| International application No. |
| --- |
| **PCT/JP2023/023137** |

**A.     CLASSIFICATION OF SUBJECT MATTER**

*H01M 4/139*(2010.01)i; *H01M 4/62*(2006.01)i
FI:     H01M4/139; H01M4/62 Z

According to International Patent Classification (IPC) or to both national classification and IPC

**B.      FIELDS SEARCHED**

Minimum documentation searched (classification system followed by classification symbols)

H01M4/139; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
| --- | --- | --- |
| A | JP 11-3709 A (HITACHI MAXELL LTD) 06 January 1999 (1999-01-06)<br>paragraph [0018] | 1-18 |
| A | JP 2002-134115 A (TAKIRON CO LTD) 10 May 2002 (2002-05-10)<br>entire text, all drawings | 1-18 |
| A | JP 2020-136093 A (SEIKO INSTR INC) 31 August 2020 (2020-08-31)<br>claims | 1-18 |
| A | JP 2012-094331 A (ASAHI GLASS CO LTD) 17 May 2012 (2012-05-17)<br>claims | 1-18 |
| A | WO 2022/024520 A1 (PANASONIC INTELLECTUAL PROPERTY MANAGEMENT CO., LTD.) 03 February 2022 (2022-02-03)<br>claims | 1-18 |
| P, X | JP 2022-103140 A (DAIKIN IND LTD) 07 July 2022 (2022-07-07)<br>entire text, all drawings | 1-18 |

☐ Further documents are listed in the continuation of Box C.          ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 August 2023** | **05 September 2023** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

## INTERNATIONAL SEARCH REPORT
### Information on patent family members

| International application No. |
| --- |
| **PCT/JP2023/023137** |

| Patent document cited in search report | | | Publication date (day/month/year) | Patent family member(s) | Publication date (day/month/year) |
| --- | --- | --- | --- | --- | --- |
| JP | 11-3709 | A | 06 January 1999 | (Family: none) | |
| JP | 2002-134115 | A | 10 May 2002 | (Family: none) | |
| JP | 2020-136093 | A | 31 August 2020 | (Family: none) | |
| JP | 2012-094331 | A | 17 May 2012 | (Family: none) | |
| WO | 2022/024520 | A1 | 03 February 2022 | (Family: none) | |
| JP | 2022-103140 | A | 07 July 2022 | TW 202235566 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017517862 W
- JP 6316784 A
- JP 2008140809 A
- WO 2020170797 A
- JP 2020115485 A
- JP 2005527652 W
- WO 2015080291 A
- WO 2012086710 A
- WO 2012063622 A